# EUROPEAN PATENT APPLICATION

(11) **EP 2 233 542 A1**
(43) Date of publication of application: **29.09.2010**
(21) Application number: 10156908.5
(22) Date of filing: 18.03.2010
(51) Int. Cl.: C09D 11/10

(54) **Active energy ray-curable composition, active energy ray-curable ink composition and inkjet recording method**

(30) Priority: 27.03.2009 JP 2009080112
(71) Applicant: Fujifilm Corporation, Minato-ku Tokyo (JP)
(72) Inventor: Kyota, Hirokazu, Ashigarakami-gun Kanagawa (JP)
(74) Representative: Grünecker, Kinkeldey, Stockmair & Schwanhäusser Anwaltssozietät

(57) **Abstract**

The present invention provides an active energy ray-curable composition containing: a compound configured to generate an acid upon irradiation with active energy rays; and a cationic polymerizable monomer, the cationic polymerizable monomer containing a polyfunctional oxirane compound having, in a molecule, one bicyclo ring skeleton or tricycle ring skeleton having at least one oxygen atom in the ring, provided that 3-membered rings and 4-membered rings containing oxygen atoms are not included in the ring structure of the bicyclo ring skeleton or tricyclo ring skeleton, and the polyfunctional oxirane compound carrying two or more oxirane rings.

## Description

### BACKGROUND OF THE INVENTION

### Field of the Invention

The present invention relates to an active energy ray-curable composition, an active energy ray-curable ink composition including the same, and an inkjet recording method.

### Related Art

Image recording methods that form an image on a recording medium such as paper based on image data signals, include electrophotographic systems, sublimation type and melt type heat transfer systems, inkjet systems and the like. The electrophotographic systems require a process of forming an electrostatic latent image on a photoreceptor drum by means of electrical charging and exposure, and thus there are problems such as complicated systems, and consequent increases in the production cost. The heat transfer systems employ inexpensive apparatuses, but since the systems make use of ink ribbons, there are problems such as high running cost and the generation of waste materials. On the other hand, the inkjet systems employ inexpensive apparatuses, and since the systems perform image formation directly on a recording medium, by jetting ink only on those image areas where necessary, an efficient use of the ink can be made at low running cost. Furthermore, the inkjet systems produce less noise, and work excellently as an image recording system.

As an inkjet ink having printing adaptability to non-absorptive recording media such as plastics, there are known ultraviolet (UV)-curable inks that cure upon irradiation with ultraviolet radiation (see, for example, Japanese Patent Application Laid-Open (JP-A) Nos. 9-183927, 2003-246818 and 2003-292855). UV-curable inks have an advantage that the time or facilities to volatilize organic solvents are not required, as compared with solvent-based inks. When such a UV-curable ink is used, systems utilizing radical polymerization of monomer components are generally used for the curing.

Recently, it has been proposed to use a cationic polymerizable compound as a component for ultraviolet-curable compositions that are applied to inks for inkjet recording, but such a curable composition of cationic polymerization system particularly has high sensitivity and curability, while it is not easy to design the curable composition as a low viscosity composition. This brings about a problem in jetting stability that is demanded when the ultraviolet-curable composition is applied to inks for inkjet recording. In an attempt to address such problems, there have been proposed ultraviolet-curable compositions containing monomers having a cationic polymerizable group with a bicyclo ring skeleton or a tricyclo ring skeleton (see, for example, JP-A Nos. 2001-220526, 2005-41892 and 2007-137926). However, these inks still cannot be said to have satisfactory curing sensitivity and cured film properties, and there is still room for improvement particularly from the viewpoint of jetting stability when the inks are used as inkjet inks.

### SUMMARY

The present invention has been made in view of the above circumstances and provides an active energy ray-curable composition comprising: a compound configured to generate an acid upon irradiation with active energy rays; and a cationic polymerizable monomer, the cationic polymerizable monomer comprising a polyfunctional oxirane compound having, in a molecule, one bicyclo ring skeleton or tricyclo ring skeleton having at least one oxygen atom in the ring, provided that 3-membered rings and 4-membered rings containing oxygen atoms are not included in the ring structure of the bicyclo ring skeleton or tricyclo ring skeleton, and the polyfunctional oxirane compound carrying two or more oxirane rings.

### DETAILED DESCRIPTION OF THE INVENTION

### [Active energy ray-curable composition and active energy ray-curable ink composition]

The active energy ray-curable composition of the invention is an active energy ray-curable composition comprising: a compound configured to generate an acid upon irradiation with active energy rays; and a cationic polymerizable monomer, the cationic polymerizable monomer comprising a polyfunctional oxirane compound having, in a molecule, one bicyclo ring skeleton or tricyclo ring skeleton having at least one oxygen atom in the ring, provided that 3-membered rings and 4-membered rings containing oxygen atoms are not included in the ring structure of the bicyclo ring skeleton or tricyclo ring skeleton, and the polyfunctional oxirane compound carrying two or more oxirane rings (hereinafter, appropriately referred to as "specific polymerizable compound"). The active energy ray-curable composition of the invention may contain other optional components as desired, in addition to the compound configured to generate an acid upon irradiation with a radiation and the cationic polymerizable monomer.

The curable composition of the invention having such a constitution as described above is cured with high sensitivity by the radiation of active energy rays, and may form a flexible cured product with no problem in brittleness.

Here, the term "active energy rays" as used in the invention is not particularly limited as long as irradiation with the energy rays may provide an energy that is configured to generate an initiator species in a composition, and broadly includes α-rays, γ-rays, X-rays, ultraviolet radiation, visible radiation, electron beams and the like. Among them, ultraviolet radiation and electron beams are preferred, and particularly ultraviolet radiation is preferred, from the viewpoint of curing sensitivity and easy availability of the apparatus.

The active energy ray-curable ink composition of the invention is an ink composition that includes the active energy ray-curable composition of the invention, and a cured ink image is formed when the ink composition is applied to a recording medium, and then the ink composition is irradiated with active energy rays. The active energy ray-curable ink composition of the invention may be suitably used as, among others, an ink composition for inkjet recording.

Hereinafter, the various constituent elements of the active energy ray-curable composition of the invention will be explained in detail, together with an active energy ray-curable ink composition as a suitable application embodiment. In addition, in the following descriptions, the active energy ray-curable composition and active energy ray-curable ink composition of the invention will be appropriately referred to as "curable composition" and "ink composition," respectively.

### (Cationic polymerizable monomer)

The curable composition and ink composition of the invention are compositions each containing a cationic polymerizable monomer, and thus these compositions essentially contain the specific polymerizable compound as the cationic polymerizable monomer. Now, the cationic polymerizable monomer according to the invention will be described in the following.

### <Specific polymerizable compound>

The specific polymerizable compound that is essentially contained in the curable composition and ink composition of the invention as the cationic polymerizable monomer, is a polyfunctional oxirane compound having, in the molecule, one bicyclo ring skeleton or tricyclo ring skeleton having at least one oxygen atom in the ring and two or more oxirane rings. However, 3-membered rings and 4-membered rings containing an oxygen atom are not included in the ring structure constituting the bicyclo ring skeleton or tricyclo ring skeleton for the polyfunctional oxirane compound.

First, the bicyclo ring skeleton or tricyclo ring skeleton having at least one oxygen atom in the ring, which is carried by the specific polymerizable compound in the molecule, will be explained.

According to the invention, the "bicyclo ring" and the "tricyclo ring" are aliphatic cyclic structures, and when the number of cleavages of interatomic bonds in the cyclic structure required to open the cyclic structure up to a chain-like structure, is 3, the cyclic structure is a "tricyclo ring", while when the same number is 2, the cyclic structure is a "bicyclo ring." A molecular skeleton formed from such a ring structure is referred to as a "tricyclo ring skeleton" or "bicyclo ring skeleton" in this invention.

However, 3-membered rings and 4-membered rings containing oxygen atoms are not included in the ring structure constituting the bicyclo ring skeleton or tricyclo ring skeleton in the polyfunctional oxirane compound. That is, the ring structures constituting the bicyclo ring or tricyclo ring according to the invention include only those ring structures that remain behind in the cured product even after the active energy ray-curable composition of the invention is cured. Therefore, a ring structure that is opened by cationic polymerization and does not remain in the cured product, such as a 3-membered ring (oxirane ring) or 4-membered ring (oxetane ring) containing an oxygen atom, is not included among the ring structures constituting the bicyclo ring or tricyclo ring according to the invention.

The atoms forming the bicyclo ring or tricyclo ring are not particularly limited except for the condition that at least one oxygen atom be contained, but a ring formed only from oxygen atoms and carbon atoms is preferable. The total number of carbon atoms and oxygen atoms forming such a ring structure is preferably from 6 to 15, and more preferably from 7 to 10.

The bicyclo ring or tricyclo ring may be substituted with any substituent, and examples of the substituent include an alkyl group, an allyl group, an aryl group, a hydroxyl group, an alkoxy group, an alkoxycarbonyl group, a halogen atom, and the like. Among these, an alkyl group or an alkoxy group is preferable.

The substituents carried by the bicyclo ring or tricyclo ring may be bonded to each other to form a larger fused ring structure including the bicyclo ring or tricyclo ring within the structure. Such a fused ring structure may be, for example, a tetracyclo ring or the like. Here, the "tetracyclo ring skeleton" refers to the case in which the number of cleavages of interatomic bonds in the cyclic structure required to open the cyclic structure up to a chain-like structure, is 4. However, in view of the molecular weight of the specific polymerizable compound and brittleness of the cured product formed from the curable composition, a bicyclo ring or tricyclo ring that does not have a fused ring structure is preferred.

The bicyclo ring skeleton or tricyclo ring skeleton carried by the specific polymerizable compound plays a role of enhancing the hardness of the cured product formed from the curable composition of the invention. Furthermore, the oxygen atom contained in the bicyclo ring skeleton or tricyclo ring skeleton exhibits an effect, when the curable composition is cured on a solid surface, such that the adhesiveness between the solid surface and the cured product is enhanced. The oxygen atom contained in the bicyclo ring skeleton or tricyclo ring skeleton also exhibits an effect of lowering the volatility of the curable composition, and an effect of enhancing the solubility of other components such as the compound configured to generate an acid upon irradiation with a radiation, in the composition. Therefore, when an ink composition which is a suitable embodiment of the curable composition of the invention, is used as an ink composition for inkjet recording, an effect that the jetting stability is further ameliorated is exhibited.

Specific examples of the bicyclo ring skeleton or tricyclo ring skeleton carried by the specific polymerizable compound include, but are not limited to, the partial structures shown below.

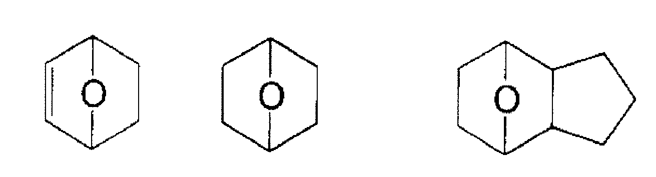

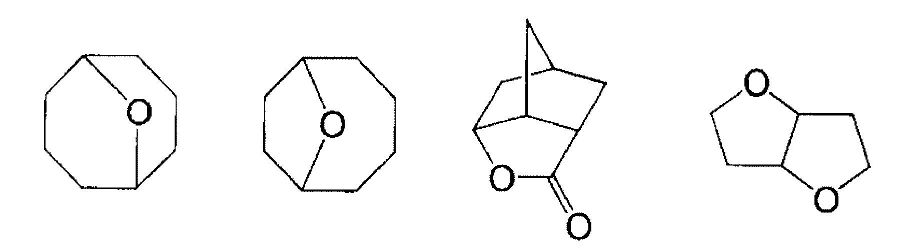

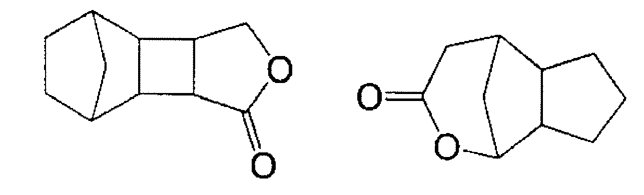

Particularly, it is preferable for the bicyclo ring skeleton or tricyclo ring skeleton carried by the specific polymerizable compound, to have a partial structure represented by the formula (I) shown below:

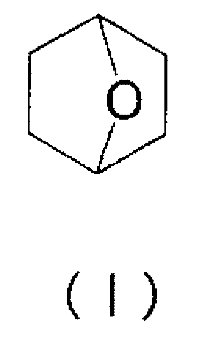

The partial structure represented by the formula (I) may share one of the ring-forming carbon-carbon bonds, with the oxirane ring that is essentially included in the specific polymerizable compound, or may have an optional substituent that does not interfere with the performance. Specific preferable examples of the optional substituent that may be introduced include an alkyl group having 1 to 12 carbon atoms, an aryl group having 6 to 12 carbon atoms, an alkoxy group having 1 to 12 carbon atoms, an aryloxy group having 6 to 12 carbon atoms, and the like. These optional substituents may also be bonded together to form constitute a new ring structure.

Since the partial structure represented by the formula (I) may be formed from an inexpensive compound, for example, by the Diels-Alder reaction or the like, the partial structure is also advantageous in view of the simplicity of the synthesis or the cost. Furthermore, since it is a structure having the oxygen atom pulled out to the outside of the ring, the partial structure is also preferable from the viewpoint of the adhesiveness between the cured product and the recording medium or the like.

Next, the relative positional relationship between the bicyclo ring skeleton or tricyclo ring skeleton and the oxirane ring in the specific polymerizable compound will be described.

The relative positional relationship between the bicyclo ring skeleton or tricyclo ring skeleton and the oxirane ring in the specific polymerizable compound preferably adopts (i) a form in which the oxirane ring shares one ring-forming carbon-carbon bond with the bicyclo ring skeleton or tricyclo ring skeleton; or (ii) a form in which the oxirane ring is linked to the bicyclo ring skeleton or tricyclo ring skeleton via a single bond, or the oxirane ring is present at a position linked to the bicyclo ring skeleton or tricyclo ring skeleton via a linking group, with 1 to 6 atoms interposed between the oxirane ring and the skeleton.

If the positions of the oxirane ring and the bicyclo ring skeleton or tricyclo ring skeleton in the specific polymerizable compound are too distant, it is difficult to obtain the desired curing sensitivity and hardness of the cured product.

Combination forms of the relative positions of the two or more oxirane rings and the bicyclo ring skeleton or tricyclo ring skeleton carried by the specific polymerizable compound, may include form (A) to form (C) shown below.
Form (A): A form in which all of the oxirane rings carried by the specific polymerizable compound share one ring-forming carbon-carbon bond with the bicyclo ring skeleton or tricyclo ring skeleton.

Form (B): A form in which at least one oxirane ring among the oxirane rings carried by the specific polymerizable compound shares one ring-forming carbon-carbon bond with the bicyclo ring skeleton or tricyclo ring skeleton, and at least one oxirane ring is linked to the bicyclo ring skeleton or tricyclo ring skeleton via a single bond, or is present at a position linked to the bicyclo ring skeleton or tricyclo ring skeleton via a linking group, with 1 to 6 atoms interposed between the oxirane ring and the skeleton.

Form (C): A form in which all of the oxirane rings carried by the specific polymerizable compound are respectively linked to the bicyclo ring skeleton or tricyclo ring skeleton via a single bond, or are each present at a position linked to the bicyclo ring skeleton or tricyclo ring skeleton via a linking group, with 1 to 6 atoms interposed between the oxirane ring and the skeleton.

Specific examples of each of the form (A) to form (C) include the forms represented by the following structural formulas (A) to (C):

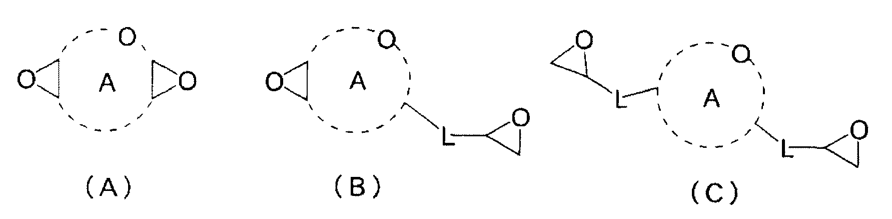

Among the structural formulas (A) to (C), ring A represents a bicyclo ring skeleton or tricyclo ring skeleton containing an oxygen atom, L represents a single bond or a divalent linking group.

When L represents a divalent linking group, the oxirane ring linked to L is present at a position linked to the ring A via L, with 1 to 6 atoms interposed between the oxirane ring and the ring A. Here, the number of atoms interposed between the ring A and the oxirane ring linked to L means, when there are a number of paths that link the oxirane ring and the ring A, the number of atoms constituting a path with the smallest number of atoms. Furthermore, this number of atoms does not include the atoms constituting the ring A and the oxirane ring. The atoms interposed between the ring A and the oxirane ring linked to L are preferably selected from a carbon atom, nitrogen atom and an oxygen atom.

The structure of the linking group L is not particularly limited, but specific preferable examples thereof include an alkylene group (a group in which one or more of the carbon atoms constituting the carbon chain has been substituted with an ether bond, an ester bond or the like, is also preferable), a group including a repeating unit of an ethyleneoxy group, an arylene group, an ether bond, an ester bond, an amide bond, and the like. The linking group L may be further substituted with substituents, and the substituents may be linked together to form a ring.

It is particularly preferable for the specific polymerizable compound to have, among the form (A) to form (C), the form (B) or form (C) represented by those forms having the structural formula (B) or (C).

The molecular weight of the specific polymerizable compound is preferably from 100 to 800, more preferably from 150 to 650, and particularly preferably from 200 to 500.

The specific polymerizable compound is preferably liquid at room temperature (25°C), but since the compound may also be used in a state dissolved in another polymerizable compound, it is acceptable that the compound is a solid.

Specific examples of the specific polymerizable compound will be presented below, but the invention is not intended to be limited to these.

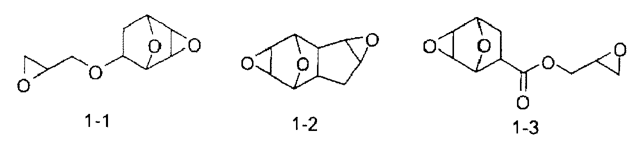

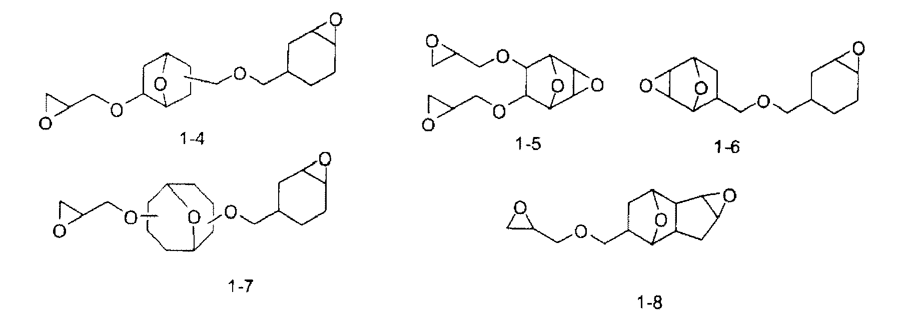

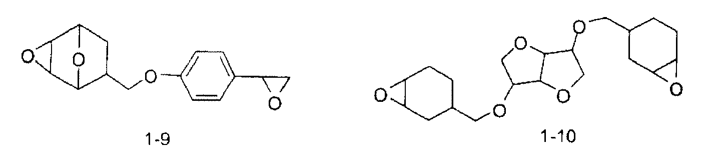

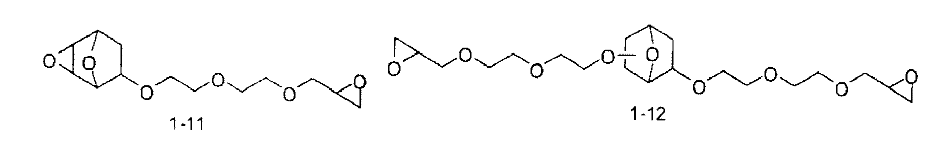

The method for synthesizing the specific polymerizable compound may be appropriately selected depending on the compound, and is not particularly limited, but there may be mentioned, for example, a technique of forming a bicyclo ring or tricyclo ring moiety by the Diels-Alder reaction, and introducing an oxirane ring to the moiety through oxidation of double bonds by an oxidizing agent or through a reaction between a hydroxyl group and epichlorohydrin. As an example of the synthesis scheme making use of such a technique, the synthesis scheme of the exemplified compound 1-1, which has been shown above as a specific example, will be shown below.

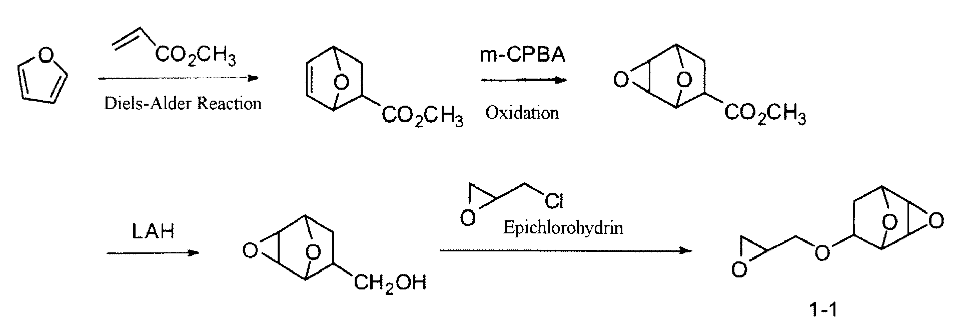

The specific polymerizable compound may be used singly or in combination of two or more compounds.

The content of the specific polymerizable compound in the curable composition of the invention is preferably from 10% by weight to 50% by weight relative to the total weight of the cationic polymerizable monomer, from the viewpoint of achieving a balance between curability and flexibility, and is more preferably from 20% by weight to 40% by weight. This also applies similarly to the case of applying the specific polymerizable compound to an ink composition.

### <Other polymerizable compound>

According to the invention, it is preferable to use another cationic polymerizable monomer in combination, in addition to the specific polymerizable compound.

The other cationic polymerizable monomer that may be used in combination with the specific polymerizable compound, is not particularly limited as long as it is a compound which initiates a polymerization reaction and cures under the action of the acid generated by the compound configured to generate an acid upon irradiation with active energy rays as will be described later, and various known cationic polymerizable compounds that are known as photocationic polymerizable compounds may be used. Examples of the other cationic polymerizable monomer include the epoxy compounds, vinyl ether compounds, other oxetane compounds not included in the specific polymerizable compound, and the like that are described in JP-ANos. 6-9714, 2001-31892, 2001-40068, 2001-55507, 2001-310938, 2001-310937, 2001-220526 and the like.

Examples of a compound that is preferred as the other cationic polymerizable monomer include oxirane compounds other than the specific polymerizable compound, oxetane compounds, vinyl ether compounds and the like.

In regard to the curable composition and ink composition of the invention, it is preferable to adopt an embodiment of using the specific polymerizable compound and a vinyl ether compound in combination, from the viewpoint of sensitivity or curability, or from the viewpoint of jetting stability obtainable when the composition is applied to inkjet recording, because vinyl ethers tend to make the composition less viscous as compared with oxetane compounds or oxirane compounds.

The content of the vinyl ether compound in the curable composition of the invention is preferably 10% by weight or more, and more preferably from 20% by weight to 50% by weight, relative to the total weight of the cationic polymerizable monomer, and this applies similarly to the case of applying the vinyl ether compound to an ink composition.

It is preferable that the contents of the specific polymerizable compound and the vinyl ether compound be 10% by weight or more, respectively, relative to the total weight of the cationic polymerizable monomer.

Furthermore, according to the invention, it is preferable to use an oxetane compound in combination as well, and the content of the oxetane compound in that case is preferably from 30% by weight to 70% by weight relative to the total weight of the cationic polymerizable monomer.

### (Compound configured to generate an acid upon irradiation with active energy rays)

The curable composition and ink composition of the invention contains a compound configured to generate an acid upon irradiation with active energy rays (radiation) (hereinafter, also appropriately referred to as "polymerization initiator").

The polymerization initiator may be appropriately selected for use from a photocationic polymerization initiator, a photodecolorant such as a dye, a photochromic agent, and a compound configured to generate an acid upon irradiation with the light used in microresists or the like (ultraviolet radiation having a wavelength of 400 to 200 nm, far-ultraviolet radiation, particularly preferably, g-rays, h-rays, i-rays, or KrF excimer laser light), ArF excimer laser light, electron beams, X-rays, molecular beams, ion beams or the like.

In regard to the curable composition and ink composition of the invention, irradiation with ultraviolet radiation is suitable, as previously mentioned, and therefore it is preferable to select a polymerization initiator having sensitiveness to ultraviolet radiation.

Examples of such a photocationic polymerization initiator include compound configured to generate an acid uppon irradiation with active energy ray by decomposition. Examples include onium salt compounds such as a diazonium salt, a phosphonium salt, a sulfonium salt and an iodonium salt; sulfonate compounds such as imidosulfonate, oximesulfonate, diazodisulfone, disulfone and o-nitrobenzyl sulfonate; and the like.

In regard to the type of the photocationic polymerization initiator that may be used in the invention, specific compounds and preferred examples thereof, the compounds described in paragraphs [0066] to [0122] of JP-A No. 2008-13646 may be exemplified.

The polymerization initiator may be used singly or in combination of two or more compounds.
The content of the polymerization initiator in the curable composition (also including the case of applying the initiator to an ink composition) is preferably from 0.1 to 20% by weight, more preferably from 0.5 to 10% by weight, and even more preferably from 1 to 7% by weight, in terms of the solids content.

### (Sensitizer)

The curable composition of the invention, and the ink composition to which the curable composition is applied, may be further added with a sensitizer that accelerates polymerization and curing. It is preferable to use an anthracene compound as the sensitizer. The anthracene compound may be substituted with a substituent.

When the anthracene compound has a substituent, examples of the substituent include an alkyl group, an alkoxy group, an aryloxy group and the like, and among them, an alkoxy group having 1 to 4 carbon atoms is particularly preferred. In addition, the number of substituents for the anthracene is preferably 1 to 4, and more preferably 1 to 2. Particularly, the position of the substituent in the case of monosubstitution is preferably the 9-position, and the position of the substituent in the case of bisubstitution is preferably the 9-position and the 10-position. Even among these, the sensitizer is particularly preferably a 9,10-substituted anthracene compound, which is an example of bisubstitution at the 9- position and the 10-position.

The content of the anthracene compound mentioned above is preferably from 35 to 100% by weight, more preferably from 40 to 80% by weight, and even more preferably from 44 to 70% by weight, relative to the total weight of the polymerization initiator. It is preferable that the preferable content of the polymerization initiator previously mentioned and the preferable content of the anthracene compound be simultaneously set to the respective ranges.

According to the invention, another sensitizer other than the anthracene compound may also be added. The other sensitizer may be used singly, or in combination with the anthracene compound. The sensitizer other than the anthracene compound may be a compound that belongs to the compound family listed below and has an absorption wavelength in the wavelength region of 350 nm to 450 nm.

Examples of the other sensitizer include polynuclear aromatics (for example, pyrene, perylene, triphenylene, 2-ethyl-9,10-dimethoxyanthracene and the like), xanthenes (for example, fluorescein, eosin, erythrosine, rhodamine B, Rose Bengal and the like), cyanines (for example, thiacarbocyanine, oxacarbocyanine and the like), merocyanines (for example, merocyanine, carbomerocyanine and the like), thiazines (for example, thionine, methylene blue, toluidine blue and the like), acridines (for example, acridine orange, chloroflavin, acriflavin and the like), anthraquinones (for example, anthraquinones and the like), squaryliums (for example, squarylium and the like), coumarins (for example, 7-diethylamino-4-methylcoumarin and the like), and the like.

The content of the sensitizer in the curable composition and ink composition of the invention is preferably from 0.01 to 20% by weight, more preferably from 0.1 to 15% by weight, and even more preferably from 0.5 to 10% by weight, relative to the total weight of the curable composition from the viewpoint of suppressing coloration of the curable composition.

Since coloration of the curable composition poses an important problem when the curable composition is used in an ink composition, it is preferable to set the content of the sensitizer to the range given above even in the case of using this curable composition in an ink composition.

The sensitizer may be used singly, or may be used in combination of two or more compounds. The content ratio (a/c) of the sensitizer (c) and the polymerization initiator (a) in the curable composition is preferably such that the ratio a/c = 100 to 0.5, more preferably a/c = 50 to 1, and even more preferably a/c = 10 to 1.5, by weight, from the viewpoint of an enhancement of the decomposition ratio of the polymerization initiator and the permeability of the irradiated light.

The curable composition and ink composition of the invention may be further added with a known compound having an effect such as of further enhancing the sensitivity as a co-sensitizer, or suppressing polymerization inhibition by oxygen.

Examples of the co-sensitizer include amines, for example, the compounds described in M.R. Sander et al., "Journal of Polymer Society", Vol. 10, p. 3173 (1972); Japanese Patent Application Publication (JP-B) No. 44-20189, JP-A Nos. 51-82102, 52-134692, 59-138205, 60-84305, 62-18537 and 64-33104; Research Disclosure No. 33825. Specific examples include triethanolamine, p-dimethylaminobenzoic acid ethyl ester, p-formyldimethylaniline, p-methylthiodimethylaniline, and the like.

Other examples of the co-sensitizer include thiols and sulfides, for example, the thiol compounds described in JP-A No. 53-702, JP-B No. 55-500806 and JP-A No. 5-142772; and the disulfide compounds described in JP-A No. 56-75643; and the like. Specific examples include 2-mercaptobenzothiazole, 2-mercaptobenzoxazole, 2-mercaptobenzoimidazole, 2-mercapto-4(3H)-quinazoline, β-mercaptonaphthalene, and the like.

Still other examples of the co-sensitizer include amino acid compounds (for example, N-phenylglycine and the like); the organometallic compounds described in JP-B No. 48-42965 (for example, tributyltin acetate and the like); the hydrogen donators described in JP-B No. 55-34414; the sulfur compounds described in JP-A No. 6-308727 (for example, trithiane and the like); the phosphorus compounds described in JP-A No. 6-250387 (for example, diethyl phosphite and the like); the Si-H and Ge-H compounds described in Japanese Patent Application No. 6-191605; and the like.
The amount of addition is appropriately selected according to the purpose, but in general, the amount is about 0.01 to 10% by weight relative to the total amount (total weight) of the curable composition or ink composition.

### (Surfactant)

It is preferable to incorporate a known surfactant into the curable composition and ink composition of the invention. Examples of the known surfactant include those described in JP-A Nos. 62-173463 and 62-183457. Specific examples thereof include anionic surfactants such as dialkylsulfosuccinic acid salts, alkylnaphthalenesulfonic acid salts and fatty acid salts; nonionic surfactants such as polyoxyethylene alkyl ethers, polyoxyethylene alkylaryl ethers, acetylene glycols, and polyoxyethylene-polyoxypropylene block copolymers; and cationic surfactants such as alkylamine salts and quaternary ammonium salts.

Here, it is also acceptable to use an organic fluoro compound instead of a known surfactant. The organic fluoro compound is preferably hydrophobic. Examples of the organic fluoro compound include fluorine-based surfactants, oily fluorine-based compounds (for example, fluorine oil) and solid fluorine compound resins (for example, ethylene tetrafluoride resin), and also include those described in JP-B No. 57-9053 (columns 8 to 17) and JP-A No. 62-135826.

### (Colorant)

The curable composition of the invention may contain a colorant according to the purpose. The ink composition of the invention may be made into an ink composition capable of forming visible images, by adding a colorant. Now, the colorant will be explained below, with an example of the case of an ink composition, which is a suitable application embodiment of the curable composition of the invention.

The colorant is not particularly limited, and various known coloring materials (pigments and dyes) may be appropriately selected and used in accordance with the application. For example, when it is intended to form an image having excellent weather resistance using the ink composition, a pigment is preferred. As for dyes, water-soluble dyes and oil-soluble dyes may all be used, but oil-soluble dyes are preferred.

### <1. Pigment>

Pigments which may be preferably used as a colorant will be described. When a pigment is used as the colorant, the colored image formed using the ink composition acquires excellent light fastness.

The pigment is not particularly limited, and generally, use may be made of all those commercially available organic pigments and inorganic pigments, pigments dispersed in insoluble resins as dispersion media, pigments having resins grafted to the pigment surface, and the like. Furthermore, resin particles dyed with a dye, and the like may also be used.

Examples of these pigments include the pigments described in Seishiro Ito, ed., "Dictionary of Pigments" (published in 2000), W. Herbst and K. Hunger, "Industrial Organic Pigments," JP-A Nos. 2002-12607, 2002-188025, 2003-26978 and 2003-342503.

Specific examples of the organic pigments and inorganic pigments that may be used in the invention include the compounds described in paragraphs [0126] to [0131] of JP-A No. 2008-13646, and these compounds are also applicable to the present invention.

Dispersion of the pigment may be carried out using dispersing apparatuses such as, for example, a ball mill, a sand mill, an attriter, a roll mill, a jet mill, a homogenizer, a paint shaker, a kneader, an agitator, a Henschel mixer, a colloid mill, an ultrasonic homogenizer, a pearl mill, and a wet jet mill.

Upon conducting dispersing of the pigment, a dispersant may be added to the composition. Examples of the dispersant include a hydroxyl group-containing carboxylic acid ester, a salt of a long-chain polyaminoamide and a high molecular weight acid ester, a salt of a high molecular weight polycarboxylic acid, a high molecular weight unsaturated acid ester, a macromolecular copolymer, a modified polyacrylate, an aliphatic polyvalent carboxylic acid, a naphthalenesulfonic acid-formalin condensate, a polyoxyethylene alkyl phosphate ester, a pigment derivative, and the like. It is also preferable to use commercially available macromolecular dispersants such as the SOLSPERSE series (trade name) manufactured by Lubrizol Corp.
Furthermore, synergists that are available in accordance with various pigments may also be used as auxiliary dispersants.
These dispersants and auxiliary dispersants are preferably added in an amount of 1 to 50 parts by weight, relative to 100 parts by weight of the pigment.

In regard to the ink composition, a solvent may be added as a dispersion medium for various components such as pigment, or a polymerizable compound, which is a low molecular weight component, may be used as the dispersion medium in a solventless state. However, since the ink composition of the invention is an active energy ray-curable type ink, and since the ink is cured after being applied onto a recording medium, it is preferable that the ink composition be solventless. This is because, when the solvent remains behind in a cured ink image, solvent resistance may be deteriorated or there occurs a problem of VOC (Volatile Organic Compound) concerning the remaining solvent. From this point of view, it is preferable to use a polymerizable compound as the dispersion medium, and to select a cationic polymerizable monomer having the lowest viscosity among others, from the viewpoint of enhancing the dispersion adaptability or the handlability of the ink composition.

The volume average particle size of the pigment particles is preferably from 0.02 µm to 0.60 µm, and more preferably from 0.02 µm to 0.10 µm. The maximum particle size is preferably 3 µm or less, and more preferably 1 µm or less, and the selection of pigment, dispersant and dispersion medium, the conditions for dispersing and the conditions for filtering are established to adjust the particle size to the range. As a result of this management of particle size, clogging of head nozzles may be suppressed, and storage stability of the ink, ink transparency and curing sensitivity may be maintained.

### <2. Dye>

Next, dyes which may be preferably used as a colorant will be described.
The dye may be appropriately selected from the conventionally known compounds (dyes) and used. Specific examples include the compounds described in paragraphs [0023] to [0089] of JP-A No. 2002-114930 and paragraphs [0136] to [0140] of JP-A No. 2008-13646; and the like, and these are also applicable to the invention.

The colorant is added to the ink composition in an amount of preferably 0.05 to 20% by weight, and more preferably 0.2 to 10% by weight, relative to the total weight of the ink composition. When an oil-soluble dye is used as the colorant, it is particularly preferable to use the dye in an amount of 0.2 to 6% by weight, relative to the total weight of the ink composition (including the solvent).

### (Additive)

In the curable composition and ink composition of the invention, various additives may be used in combination as optional components according to the purposes, in addition to the various essential components. These optional components will be explained.

### <Ultraviolet absorbent>

The curable composition and ink composition of the invention may be added with an ultraviolet absorbent, from the viewpoint of enhancing the weather resistance of the obtainable cured product or image, and preventing discoloration.

Examples of the ultraviolet absorbent include the benzotriazole-based compounds described in JP-ANos. 58-185677, 61-190537, 2-782, 5-197075, 9-34057 and the like; the benzophenone-based compounds described in JP-A Nos. 46-2784 and 5-194483, US Patent No. 3214463, and the like; the cinnamic acid-based compounds described in JP-B Nos. 48-30492 and 56-21141, JP-A No. 10-88106, and the like; the triazine-based compounds described in JP-A Nos. 4-298503, 8-53427, 8-239368, 10-182621, Japanese Patent Application National Publication (Laid-Open) No. 8-501291, and the like; the compounds described in Research Disclosure No. 24239; and compounds which absorb ultraviolet radiation and emit fluorescence, as represented by stilbene-based and benzoxazole-based compounds, that is, so-called fluorescent whitening agents.
The amount of addition of the ultraviolet absorbent may be appropriately selected according to the purpose, but in general, the amount is about from 0.01 to 10% by weight relative to the total amount (total weight) of the curable composition or ink composition.

### <Antioxidant>

The curable composition and ink composition of the invention may be added with an antioxidant, for the purpose of stability enhancement. Examples of the antioxidant include the agents described in European Patent Application Nos. 223739, 309401, 309402, 310551, 310552 and 459416; German Patent No. 3435443; JP-ANos. 54-48535, 62-262047, 63-113536, 63-163351, 2-262654, 2-71262, 3-121449, 5-61166 and 5-119449; US Patent Nos. 4814262 and 4980275; and the like.
The amount of addition of the antioxidant may be appropriately selected according to the purpose, but in general, the amount is about from 0.01 to 10% by weight relative to the total amount (total weight) of the curable composition or ink composition.

### <Discoloration preventing agent>

When the curable composition of the invention is used in an ink composition, use may be made of various organic and metal complex-based discoloration preventing agents. Examples of the organic discoloration preventing agents include hydroquinones, alkoxyphenols, dialkoxyphenols, phenols, anilines, amines, indanes, chromanes, alkoxyanilines, heterocycles and the like. Examples of the metal complex-based discoloration preventing agents include nickel complexes, zinc complexes and the like, and specific examples that may be used include the compounds described in Research Disclosure No. 17643 under items VII-I and VII-J; No. 15162; No. 18716, p. 650, left column; No. 36544, p. 527; No. 307105, p. 872; and the patent documents cited in No. 15162, or the compounds included in the general formula and compound examples of the representative compounds described in JP-A No. 62-215272, pp. 127-137.
The amount of addition may be appropriately selected according to the purpose, but in general, the amount is about from 0.01 to 10% by weight, relative to the total amount (total weight) of the ink composition.

### <Electroconductive salts>

When the curable composition of the invention is used in an ink composition, particularly in an ink composition for inkjet recording, electroconductive salts such as potassium thiocyanate, lithium nitrate, ammonium thiocyanate and dimethylamine hydrochloride, may be added to the composition for the purpose of controlling the ejection properties.

### <Solvent>

It is also effective to add a trace amount of an organic solvent to the curable composition and ink composition of the invention, in order to improve the adhesiveness between the solid surface of a recording medium or the like, and the cured product or formed image.
Examples of the solvent include ketone-based solvents such as acetone, methyl ethyl ketone and diethyl ketone; alcohol-based solvents such as methanol, ethanol, 2-propanol, 1-propanol, 1-butanol and tert-butanol; chlorine-based solvents such as chloroform and methylene chloride; aromatic solvents such as benzene and toluene; ester-based solvents such as ethyl acetate, butyl acetate and isopropyl acetate; ether-based solvents such as diethyl ether, tetrahydrofuran and dioxane; glycol ether-based solvents such as ethylene glycol monomethyl ether and ethylene glycol dimethyl ether; and the like.
In this case, an addition to the extent that deterioration of solvent resistance does not occur is effective, and the amount is preferably in the range of 0.1 to 5% by weight, and more preferably 0.1 to 3% by weight, relative to the total weight of the curable composition or ink composition.

### <Macromolecular compound>

The curable composition and ink composition of the invention may be added with various macromolecular compounds, for the purpose of regulating the film properties. Examples of the macromolecular compounds that may be used include an acrylic polymer, a polyvinyl butyral resin, a polyurethane resin, a polyamide resin, a polyester resin, an epoxy resin, a phenol resin, a polycarbonate resin, a polyvinyl butyral resin, a polyvinyl formal resin, shellac, a vinyl-based resin, an acrylic-based resin, a rubber-based resin, waxes, other natural resins, and the like. These may be used in combination of two or more compounds, without any problem. Among these, a vinyl-based copolymer obtainable by copolymerization of acrylic-based monomers is preferred. Furthermore, a copolymer including "a carboxyl group-containing monomer," "a methacrylic acid alkyl ester" or "an acrylic acid alkyl ester" as structural units may also be preferably used for the copolymer composition of the macromolecular binding material.

In addition to these, the curable composition and ink composition of the invention may be incorporated with, for example, a leveling additive, a matting agent, waxes for regulating film properties, a tackifier which does not inhibit polymerization and is intended to improve the adhesiveness to the recording medium, such as a polyolefin or PET, and the like according to necessity.

Specific examples of the tackifier include the high molecular weight adhesive polymers described in JP-A No. 2001-49200, pp. 5-6 (for example, a copolymer formed from an ester of (meth)acrylic acid and an alcohol having an alkyl group having 1 to 20 carbon atoms, an ester of (meth)acrylic acid and an alicyclic alcohol having 3 to 14 carbon atoms, and an ester of (meth)acrylic acid and an aromatic alcohol having 6 to 14 carbon atoms), low molecular weight tackifying resins having polymerizable unsaturated bonds, and the like.

### (Properties preferable when applied to ink composition)

It is as previously described that since the curable composition of the invention cures with high sensitivity and is excellent in the strength and flexibility of the cured product, it is preferable to apply the curable composition to an active energy ray-curable ink composition. However, it is particularly preferable to apply the curable composition to an inkjet ink composition that is applicable to inkjet recording methods.

When the ink composition of the invention is applied to inkjet recording, the ink viscosity at the temperature upon jetting is preferably from 5 mPa·s to 30 mPa·s, and more preferably from 7 mPa·s to 20 mPa·s, in consideration of jettability. Therefore, it is preferable to determine the viscosity by appropriately adjusting the composition ratio so as to achieve the range mentioned above.
The viscosity of the ink composition at room temperature (25 to 30°C) is preferably from 7 mPa·s to 120 mPa·s, and more preferably 10 mPa·s to 80 mPa·s. When the viscosity at room temperature is set high, even if a porous recording medium is used, ink penetration into the recording medium may be prevented, and reduction of uncured monomer and reduction of foul odor are made possible. Furthermore, dot bleeding at the time of landing of ink droplets may be suppressed, and as a result, image quality may be improved.

The surface tension of the ink composition of the invention is preferably from 20 mN/m to 40 mN/m, and more preferably 20 mN/m to 30 mN/m. When recording is performed using the ink composition of the invention on various recording media such as polyolefin, PET, coated paper and non-coated paper, the surface tension is preferably 20 mN/m or greater from the viewpoint of bleeding and penetration, and the surface tension is preferably 30 mN/m or less from the viewpoint of wettability.

When the ink composition of the invention is applied for inkjet recording, the inkjet recording system is not particularly limited, and the inkjet recording system may be, for example, any of a charge control system which jets out ink using electrostatic attractive force; a drop-on-demand system (pressure pulse system) which uses the vibration pressure of a piezoelectric element; an acoustic type inkjet system which converts an electric signal into an acoustic beam, irradiates an ink with the acoustic beam, and jets out the ink utilizing a radiation pressure; a thermal type inkjet system which forms air bubbles by heating an ink, and utilizes the pressure generated therefrom; and the like. Furthermore, the inkjet recording system also includes a system that ejects an ink having a low concentration, called a photo ink, in the form of a large number of small-volume droplets; a system that improves the image quality using plural inks that have substantially the same color but different concentrations; or a system that makes use of a colorless transparent ink.
Among the systems described above, the ink composition of the invention is suitable as an ink for inkjet recording based on the drop-on-demand system (pressure pulse system) that makes use of a piezoelectric element.

### [Inkjet recording method]

The ink composition of the invention may be used in an inkjet recording method including (a) a process of jetting the ink composition on a recording medium using an inkjet recording apparatus (image recording process), and (b) a process of curing the ink composition by irradiating the jetted ink composition with active energy rays (image curing process).
That is, the inkjet recording method of the invention is a method including an image recording process of forming an image by inkjet recording, and an image curing process.

In regard to the image curing process according to the inkjet recording method of the invention, when active energy rays are utilized in the image curing process, and an image is recorded on a recording medium and then the recorded image is irradiated with active energy rays in the image recording process, polymerization and curing of the polymerizable compound that contributes to image formation proceed. Thus, a highly robust image that is satisfactorily cured may be formed.

In the mage curing process, there may be carried out an exposure treatment of accelerating polymerization and curing using a light source that emits an active energy ray having a wavelength in the region corresponding to the induction wavelength possessed by the ink composition. The light source, exposure time and amount of light may be appropriately selected in accordance with the degree of polymerization and curing of the cationic polymerizable monomer according to the invention.

The thickness of the image cured in the image curing process is preferably from 2 µm to 30 µm. Here, the "thickness of image" refers to the thickness of the cured product obtained by curing an image formed using an ink composition. When the thickness of the image is from 2 µm to 30 µm, images from low density to high density may be freely expressed.

In the image curing process, there may be carried out an exposure treatment of accelerating polymerization and curing using a light source that emits an active energy ray having a wavelength in the region corresponding to the induction wavelength possessed by the ink composition. Specifically, the exposure treatment may be suitably carried out using a light source that emits an active radiation having a wavelength in the region of 250 nm to 450 nm, and preferably 365±20 nm, for example, a laser diode (LD), a light emitting diode (LED), a fluorescent lamp, a low pressure mercury lamp, a high pressure mercury lamp, a metal halide lamp, a carbon arc lamp, a xenon lamp, or a chemical lamp. Preferred examples of the light source include an LED, a high pressure mercury lamp, and a metal halide lamp, and among them, it is preferable to use an LED as the light source for the curing of the cationic polymerizable composition of the invention.

A recorded matter obtained by using an ink of the ink composition of the invention is such that the image areas are cured by irradiation with an active energy ray such as ultraviolet radiation, and thus the strength of the image areas is excellent. Therefore, the recorded matter may also be used as, for example, an ink receiving layer (image area) of a planographic printing plate.

In regard to the image recording process, it is preferable to apply an inkjet recording method using an inkjet printer. Specifically, it is preferable for the image recording process that images are recorded by an inkjet recording technique of jetting an ink composition.

Next, a specific exemplary embodiment of the inkjet recording method of the invention will be explained below, including the details of an inkjet recording apparatus that may be suitably employed in the relevant method.

### • System

An exemplary form of the inkjet recording system that jets out ink may be represented by a system disclosed in JP-A No. 2002-11860, but the system is not limited to this form and may adopt other forms as well.

### • Ink retaining unit

In regard to a unit that retains ink, it is preferable to fill in the ink in a known ink cartridge, or the ink retaining unit may be contained in a deformable container to form a tank, as disclosed in JP-A No. 5-16377. Furthermore, as disclosed in JP-A No. 5-16382, if the unit is equipped with a subtank, supply of ink will be more stabilized. As disclosed in JP-A No. 8-174860, a cartridge in the form of supplying ink based on the movement of a valve when the pressure in the ink supply chamber is decreased, may also be used. Suitable methods for applying a negative pressure in order to appropriately maintain the meniscus in the head in such an ink retaining unit, include a method based on the height of the ink retaining unit, that is, the hydraulic head pressure; a method based on the capillary force of a filter provided in the ink flow channel; a method of controlling the pressure using a pump or the like; a method of maintaining the ink in an ink absorber and applying a negative pressure by means of its capillary force, as disclosed in JP-A No. 50-74341; and the like.

### • Ink supply channel

Methods for supplying ink from such an ink retaining unit to a head may include a method of directly connecting the retaining unit to a head unit, or a method of connecting the retaining unit to a head unit via a flow channel such as a tube. These ink retaining units and flow channels are preferably formed from a material such as a material having satisfactory wettability with ink, or a material that has been subjected to a surface treatment.

### • Head

Methods of ejecting ink droplets may include a method of continuously jetting ink droplets and controlling to select whether to land the droplets slantingly on a material to be recorded in accordance with the image, as disclosed in JP-A No. 5-104725; or a method of jetting ink droplets only to those necessary portions in an image, so called as an on-demand system. The on-demand system may be a system of jetting the ink by generating an ink pressure through deformation of a structure using a piezoelectric element or the like, as disclosed in JP-A No. 5-16349, or may be a system of jetting the ink under a pressure that is generated by expansion as a result of vaporization due to thermal energy, as disclosed in JP-A No. 1-234255. Furthermore, as disclosed in JP-A No. 2001-277466, the system may also be a system of controlling the jetting to a material to be recorded under the action of an electric field.

In regard to the inkjet recording method, image recording is performed on a recording medium using the ink composition of the invention. The ink jetting nozzle used at that time or the like is not particularly limited, and may be appropriately selected according to the purpose. A nozzle in the form such as described in, for example, JP-A No. 5-31908 is applicable. In this case, when nozzles are configured in plural rows as described in JP-A No. 2002-316420 in order to jet out inks of plural colors, color images may be formed at high speed. Furthermore, if plural head units each having plural nozzle rows are arranged, a further increase in the speed may be achieved.

When nozzles are arranged at a width interval equal to or greater than the width of the image, to thereby form a so-called line head, and a material to be recorded is moved concurrently with the droplet ejection from these nozzles, as described in JP-A No. 63-160849, formation of images at high speed is made possible.
If a surface treatment such as that disclosed in JP-A No. 5-116327 is applied to the surfaces of nozzles, adhesion of airborne ink droplets to the nozzle surfaces and adhesion of ink droplets may be prevented.

Even if such a treatment is applied, dirt may still adhere in some cases, and for this reason, it is preferable to perform cleaning using a blade as disclosed in JP-A No. 6-71904.
It may not be true that inks of various colors are always equally ejected from the nozzles, and in some cases, some particular inks may not be jetted out for a long time. In such an instance, in order to maintain the meniscus stable, it is preferable to maintain the ink properties at adequate values by appropriately jetting the ink to areas outside the image area, and replenishing new ink to the head.

Even if such measures are taken, air bubbles may penetrate into the head or may be generated in the head. In this case, as described in JP-A No. 11-334092, if ink is forcibly sucked in from the outside of the head, ink with changed properties may be discarded, and at the same time, the air bubbles may be discharged out of the head. Furthermore, if ink droplet ejection is not intended for a long time, the nozzle surface may be protected by covering the nozzle surface with a cap, as described in JP-A No. 11-138830. In some cases, jetting may still not occur even if these measures are taken.

If an image is printed while some of the nozzles are incapable of jetting, there arises a problem that unevenness occurs in the image. In order to avoid such situation, it is effective to detect any nozzle that is incapable of jetting, and to take measures, as disclosed in JP-A No. 2000-343686.

When overlapped droplet ejection is carried out by mechanically moving the head unit, and synchronously moving the material to be recorded intermittently in a perpendicular direction as described in JP-A No. 6-115099, it is effective in making hardly visible of the unevenness resulting from accuracy defect in the intermittent movement of the material to be recorded, and high image quality may be realized. In this case, the relationship between image quality and the recording speed may be established into a preferable relationship, by appropriately balancing the relationship between the speed of head movement, the extent of movement of the material to be recorded, and the number of nozzles.

Furthermore, on the contrary, when the head is fixed, and the material to be recorded is mechanically made to move in a shuttling manner in a predetermined direction and at the same time, is made to move intermittently in a direction perpendicular to the predetermined direction, a similar effect may be obtained.

### • Temperature control

It is preferable that the inkjet recording apparatus be equipped with a unit that stabilizes the temperature of the ink composition, and the region of the apparatus to be maintained at a constant temperature includes all members in the piping system covering from the ink tank (including an intermediate tank, if present) to the nozzle ejection surface.

In regard to the inkjet recording method, it is preferable to heat the ink composition to 40°C to 80°C to decrease the viscosity of the ink composition down to 30 mPa·s or less, and preferably 20 mPa·s or less, and then to perform ejection. High ejection stability may be realized by using this method. In general, since radiation-curable ink compositions commonly have higher viscosities than those of aqueous inks, the range of fluctuation in the viscosity due to the fluctuation in temperature at the time of printing is large. Since this viscosity fluctuation of the ink composition directly exerts a large influence on the size of liquid droplets and the rate of liquid droplet ejection, and thereby causes deterioration in the image quality, it is required to maintain the temperature of the ink composition at the time of printing as constant as possible. Therefore, it is preferable to provide the inkjet recording apparatus with an ink temperature detecting unit, an ink heating unit, and a control unit that controls heating in accordance with the detected ink temperature.

The method of controlling the temperature is not particularly limited, but it is preferable to control heating in accordance with the flow rate of the ink composition and the temperature of the environment, for example, by providing plural temperature sensors at various piping sites. Furthermore, the head unit to be heated is preferably thermally shielded or insulated, so that the apparatus body is not under the influence of the temperature of air in the outside. In order to shorten the warm-up time for the printer that is required in heating, or to reduce a loss in thermal energy, it is preferable to carry out insulation from other sites, and also to decrease the overall heat capacity of the heating unit.
Alternatively, it is also suitable to have a unit that controls the energy applied to the unit for jetting ink in accordance with the ink temperature.

The control range of the ink composition temperature is preferably adjusted to the set temperature ± 5°C, more preferably to the set temperature ± 2°C, and even more preferably to the set temperature ± 1°C.

### • Exposure

In regard to the light source, as described previously, a commonly used mercury lamp, metal halide lamp or the like may be used, and a light emitting diode, a semiconductor laser, a fluorescent lamp and the like may be used. Light sources, electromagnetic waves and the like, which induce the polymerization reaction of the ink, such as a hot cathode tube, a cold cathode tube, an electron beam and X-rays, may also be used.

When a metal halide lamp is used, a lamp having an output power of 10 W/cm to 1000 W/cm is used, and a metal halide lamp having an illuminance of 1 mW/cm² to 100 W/cm² at the surface of a recording medium is preferred.

When a high pressure mercury lamp, a metal halide lamp or the like is used, it is preferable to provide the inkjet recording apparatus with an exhaust unit, because ozone is generated along with electric discharge. It is suitable to have the exhaust unit disposed such that the unit also combines the function of recovering ink mist that is generated at the time of jetting of ink.

Next, preferable conditions for the irradiation with active energy rays will be described. The basic method of irradiation is disclosed in JP-A No. 60-132767. Specifically, light sources are provided on both sides of the head unit, and the head and the light source are scanned in a shuttling manner. Irradiation is carried out after the landing of the ink, after taking some time. Furthermore, curing is completed by a separate light source that does not necessitate driving. WO 99/54415 discloses a method of using an optical fiber, or a method of irradiating a recorded area with UV light by making a collimated light source incident to a mirror surface that is provided at a lateral side of the head unit, as the method of irradiation. These irradiation methods may be sufficiently used in this invention.

When an ink jetting nozzle is irradiated with an active energy ray for curing, the ink mist or the like adhering to the nozzle surface is solidified, and may pose an obstacle to ink jetting. Thus, it is preferable to take measures such as light shielding, in order to minimize irradiation of nozzles. Specifically, it is suitable to provide a barrier that prevents irradiation of the nozzle plate, or to provide a unit for limiting the incident angle to the material to be recorded so as to reduce stray light.

According to the invention, it is preferable to adjust the time taken from droplet landing to irradiation to be from 0.01 seconds to 0.5 seconds, and it is preferable to irradiate the ink composition with a radiation after from 0.01 seconds to 0.3 seconds, and more preferably from 0.01 seconds to 0.15 seconds. As such, when the time taken from droplet landing to irradiation is controlled to be extremely short, preventing the landed ink droplets from bleeding before curing may be achieved. Also, even for a porous recording medium, since the medium can be exposed before the ink composition penetrates down to the core part where the light source does not reach, unreacted monomers are inhibited from remaining behind, and consequently, an odor originating therefrom may be reduced. When the inkjet recording method described above and the ink composition of the invention are used in combination, a great synergistic effect may be obtained. When such a recording method is adopted, the dot diameter of landed ink droplets may be maintained constant even on various recording media that differ in the surface wettability, and thus the image quality is enhanced.

### • System parameters

Upon forming an image, the ink landing diameter on a material to be recorded is suitably between 10 and 500 µm, and for this reason, the diameter of ink droplets at the time of jetting is preferably from 5 to 250 µm, while the nozzle diameter is preferably from 15 to 100 µm.
Upon the formation of an image, the number of pixels per inch is preferably from 50 to 2400 dpi, and therefore, the nozzle density in the head is preferably from 10 to 2400 dpi. Here, even if the nozzle density in the head is low, when the nozzles are tilted against the direction of conveyance of the material to be recorded, or when plural head units are arranged to be relatively tilted, landing at a high density may be realized using a head with large nozzle intervals. Furthermore, high density image recording may be realized by conveying the material to be recorded to a predetermined extent whenever the head moves at a low nozzle pitch as a result of the shuttling movement of the head or material to be recorded as described above, and thus landing ink droplets at different positions.

The amount of ink droplet ejection to a recording medium may be suitably controlled to be any amount between 0.05 g/m² and 25 g/m², so as to express a satisfactory gradation, and it is preferable to control the size of the ink droplets jetted from the head, and/or the quantity thereof, in order to realize this amount.

In regard to the distance between the head and the material to be recorded, if the distance is too broad, air flows out concomitantly with the movement of the head or the material to be recorded, and the flight of the ink droplets is disrupted, so that the accuracy on the position of landing is decreased. On the other hand, if the distance is too narrow, there is a risk that the head and the material to be recorded are brought to contact because of the surface unevenness of the material to be recorded, vibration caused by the conveyance mechanism, or the like. Thus, the distance is preferably maintained at about 0.5 mm to 2 mm.

### • Ink set

The ink may be of a single color, or may be of cyan, magenta and yellow colors. The ink may be a set of four colors including black, or inks of specific colors other than these colors, which are called special colors, may also be used. The coloring material may be a dye or a pigment. In regard to the order of droplet ejection of these inks, the droplet ejection may be carried out such that the inks are made to land in an order of increasing brightness, or may be carried out such that the inks are made to land in an order of decreasing brightness. Thus, it is preferable to carry out the droplet ejection in a suitable order in terms of the image recording quality.

If the inks are superimposed in order from a color of the highest brightness, it is easy for the active energy ray to reach to the ink in the lower part, while inhibition of the curing sensitivity, an increase in the residual monomers, generation of foul odor, and deterioration of adhesiveness hardly occur. In regard to the irradiation, all of the colors may be ejected and collectively exposed, but it is preferable from the viewpoint of curing acceleration, to expose each color separately.
In regard to the image signals to be recorded, it is preferable to subject the signals to signal processing so as to obtain satisfactory color reproducibility, as described in JP-A No. 6-210905 for example.

The embodiment of use of the ink composition of the invention is not limited to the inkjet recording method described above, and may also be applied to, for example, an instance of forming an ink image on a recording medium by a method other than inkjet recording in the image recording process, and combining this with the image curing process for irradiating the ink mage with active energy rays; an instance of jetting the ink composition on a recording medium by an inkjet recording apparatus, and then heating the ink composition to cure the image; or the like.

The ink composition of the invention may also be used in three-dimensional modeling applications, for example, in the applications of forming a printing ink receiving section in a planographic printing plate as previously mentioned, in addition to the inkjet recording applications, and the ink composition may also be used for canister printing applications or food product applications. In these applications, images may be formed using known methods, and reference may be made to, for example, the descriptions of Japanese Patent No. 2679586 and the like.

### [Recording medium]

As for the recording medium on which recording is performed using the ink composition of the invention, ink-permeable recording media and non-ink-permeable recording media may be used together. Examples of the ink-permeable recording media include ordinary papers, papers exclusive for inkjet use, coated papers, papers for general and electrophotographic use, fabrics, unwoven fabrics, porous films, macromolecular absorbers, and the like. These are described as "materials to be recorded" in JP-A No. 2001-1891549 and the like.

Example of the non-ink-permeable recording media include art papers, synthetic resins, rubbers, resin-coated papers, glass, metals, porcelain, wood, and the like. In addition, use may also be made of base materials prepared by combining a number of these materials and processing into complex materials to add the respective functions.

Any synthetic resin may be used as the synthetic resin used as a non-ink-permeable recording medium, but for example, polyesters such as polyethylene terephthalate and polybutadiene terephthalate; polyolefins such as polyvinyl chloride, polystyrene, polyethylene, polyurethane and polypropylene; and acrylic resins, polycarbonates, acrylonitrile-butadienestyrene copolymers, diacetates, triacetates, polyimides, cellophane, celluloids, and the like may be mentioned.

The shape (thickness) of a recording medium utilizing a synthetic resin may have a film shape, a card shape or a block shape, and may be appropriately selected according to the desired purpose without particularly limitation. These synthetic resins may be transparent or may be opaque.

In regard to the form of use of the recording medium utilizing a synthetic resin, the synthetic resin may be used in the form of the film that is used in so-called soft packaging according to a preferred embodiment, and various non-absorptive plastics and films thereof may be used. Examples of the films formed from various plastics include polyethylene terephthalate (PET) films, biaxially stretched polystyrene (OPS) films, biaxially stretched polypropylene (OPP) films, biaxially stretched nylon (ONy) films, polyvinyl chloride (PVC) films, polyethylene (PE) films, and triacetylcellulose (TAC) films.

Examples of the resin-coated paper used as a non-ink-permeable recording medium, include transparent polyester films, opaque polyester films, opaque polyolefin resin films, and paper supports laminated on both surfaces with polyolefin resins. The paper supports laminated on both surfaces with polyolefin resins are particularly preferred.

As discussed above, according to the image recording method using the ink composition of the invention, images excellent in strength and flexibility, as well as in the adhesiveness to recording media may be obtained. Furthermore, the obtained recorded matters have excellent adhesiveness, and do not cause a problem related to brittleness.
In addition to the use in ink compositions, the curable composition of the invention is also applicable to the fields of coating, adhesive agents, rapid prototyping, photoresist for semiconductor and the like.

### Exemplary embodiments of the invention will be listed in the following.

<1> An active energy ray-curable composition comprising: a compound configured to generate an acid upon irradiation with active energy rays; and a cationic polymerizable monomer, the cationic polymerizable monomer comprising a polyfunctional oxirane compound having, in a molecule, one bicyclo ring skeleton or tricyclo ring skeleton having at least one oxygen atom in the ring, provided that 3-membered rings and 4-membered rings containing oxygen atoms are not included in the ring structure of the bicyclo ring skeleton or tricyclo ring skeleton, and the polyfunctional oxirane compound carrying two or more oxirane rings.

<2> The active energy ray-curable composition according to <1>, wherein all of the two or more oxirane rings carried by the polyfunctional oxirane compound share one ring-forming carbon-carbon bond with the bicyclo ring skeleton or tricyclo ring skeleton.
<3> The active energy ray-curable composition according to <1>, wherein at least one oxirane ring among the two or more oxirane rings carried by the polyfunctional oxirane compound shares one ring-forming carbon-carbon bond with the bicyclo ring skeleton or tricyclo ring skeleton; and at least one oxirane ring is linked to the bicyclo ring skeleton or tricyclo ring skeleton via a single bond, or is present at a position linked to the bicyclo ring skeleton or tricyclo ring skeleton via a linking group, with 1 to 6 atoms interposed between the position and the skeleton.
<4> The active energy ray-curable composition according to <1>, wherein all of the two or more oxirane rings carried by the polyfunctional oxirane compound are respectively linked to the bicyclo ring skeleton or tricyclo ring skeleton via a single bond, or are each present at a position linked to the bicyclo ring skeleton or the tricyclo ring skeleton via a linking group, with 1 to 6 atoms interposed between the position and the skeleton.

<5> The active energy ray-curable composition according to any one of <1> to <4>, wherein the bicyclo ring skeleton or the tricyclo ring skeleton includes a partial structure represented by the following formula (I):

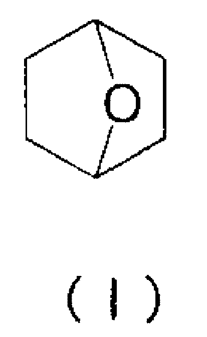

<6> The active energy ray-curable composition according to any one of <1> to <5>, comprising the polyfunctional oxirane compound and a vinyl ether compound in respective amounts of 10% by weight or more relative to a total weight of the cationic polymerizable monomer.

<7> An active energy ray-curable ink composition comprising the active energy ray-curable composition according to any one of <1> to <6>.
<8> An inkjet recording method comprising ejecting the active energy ray-curable ink composition according to <7> onto a recording medium using an inkjet recording apparatus, and irradiating the ejected ink composition with active radiation to cure the ink composition.

### EXAMPLES

Hereinafter, the present invention will be described by way of Examples, but the invention is not intended to be limited to these Examples. In the present Example, an instance of preparing an ink for inkjet recording will be shown as an example of the ink composition. Unless particularly stated otherwise, "parts" are on a weight basis.

### <Synthesis Example 1>

### Synthesis of specific polymerizable compound (1-1)

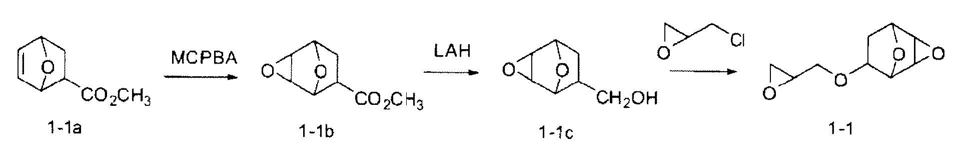

### i) Synthesis of compound (1-1b)

20 g (0.13 mol) of a compound (1-1a) obtained according to a method described in "Tetrahedron Letters, 23, 5299 (1982)" was dissolved in 250 mL of dichloromethane, and while the solution was stirred under water cooling, 50 g (0.22 mol) of m-chloroperbenzoic acid (MCPBA, > 77%, manufactured by Sigma-Aldrich Co.) was added to the solution in five divided portions, in a powdered form, while the internal temperature was maintained at 15°C to 30°C. The mixture was stirred for 2 hours at 25°C. The reaction liquid was ice-cooled, and 130 mL of 10% sodium thiosulfate was added thereto. Subsequently, 150 mL of a 10% aqueous solution of sodium hydrogen carbonate was added thereto, and the mixture was stirred for 30 minutes at room temperature. The aqueous layer was removed, and then the organic layer was washed with 200 mL of saturated brine. The organic layer was purified by silica gel column chromatography, and thus 15.5 g (yield 63%) of a compound (1-1b) was obtained.

### ii) Synthesis of specific polymerizable compound (1-1)

15.5 g (0.091 mol) of the obtained compound (1-1b) was dissolved in 45 mL of dehydrated tetrahydrofuran (manufactured by Wako Pure Chemical Industries, Ltd.), and the solution was slowly added dropwise to a suspension of 6.2 g (0.16 mol) of lithium aluminum hydride in 21 mL of dehydrated tetrahydrofuran under a nitrogen atmosphere, while the internal temperature was maintained at 0°C to 8°C. After completion of the dropwise addition, the mixture was stirred for 90 minutes at room temperature, and then was ice-cooled again. 120 mL of methanol was added to the mixture, and subsequently, 38 g of (+)-sodium potassium tartrate tetrahydrate (manufactured by Wako Pure Chemical Industries, Ltd.) was added, in a solid form, to the mixture. Solids were removed by filtration, and the solvent was distilled off under reduced pressure from the resulting filtrate, to thereby obtain a crude product of a compound (1-1c).
Subsequently, to the entire amount of the obtained crude product of compound (1-1c), 20 mL (0.26 mol) of epichlorohydrin (manufactured by Wako Pure Chemical Industries, Ltd.), 1.53 g of tetrabutylammonium hydrogen sulfate (manufactured by Wako Pure Chemical Industries, Ltd.), and 60 mL of a 50% aqueous solution of sodium hydroxide were added, and the mixture was stirred for 3 hours at 40°C. The reaction liquid was poured onto ice water, and the mixture was extracted with ethyl acetate. The organic layer was washed with saturated brine. The solvent was distilled off under reduced pressure, and the resulting crude product was purified by silica gel chromatography. Thus, 8.0 g of a specific polymerizable compound (1-1) was obtained as a colorless transparent liquid (yield from the compound (1-1b) 48%).

Specific polymerizable compound (1-1) (mixture of stereoisomers): ¹H-NMR(CDCl3, 300MHz)δ : 1.2--2.1(m, 3H), 2.6-2.9(m, 2H), 3.1-3.8(m, 7H),4.4-4.5(m, 2H)

### [Example 1]

### <Preparation of pigment dispersion>

20% by weight of CROMOPHTHAL JET MAGENTA DMQ (PR-122) (trade name), 72% by weight of ARONOXETANE [bis(3-ethyl-3-oxetanylmethyl)ether] OXT-221 (trade name, manufactured by Toagosei Co., Ltd.), and 8% by weight of SOLSPERSE 32000 (trade name, manufactured by Lubrizol Corp.) were introduced into a ball mill, and the mixture was dispersed for 16 hours using zirconia beads having a diameter of 0.6 mm, to thereby obtain a pigment dispersion.

### <Preparation of magenta ink composition for UV inkjet>

The pigment dispersion prepared as described above, cationic polymerizable monomers (specific polymerizable compound and other cationic polymerizable monomer), a photocationic polymerization initiator, a sensitizer and a dispersant were mixed to obtain a composition 1 shown below. The mixture was stirred using a high speed, water-cooled type stirrer, and thus a magenta ink composition for UV inkjet was obtained.

### [Constitution 1]

• CROMOPHTHAL JET MAGENTA DMQ (PR-122) 5.0 parts
   (trade name, manufactured by Ciba Specialty Chemicals, Inc.)
• SOLSPERSE 32000 2.0 parts
   (trade name, a dispersant manufactured by Lubrizol Corp.)
• Bifunctional oxetane compound 25.0 parts
   (trade name: OXT-221, manufactured by Toagosei Co., Ltd.)
• Bifunctional vinyl ether compound 25.0 parts
   (trade name: DVE-3, manufactured by ISP Europe, Inc.)
•Specific polymerizable compound (1-1) 25.0 parts
• Monofunctional polymerizable compound 25.0 parts
   (3-ethyl-3-phenoxymethyloxetane, trade name: OXT-211, manufactured by Toagosei Co., Ltd.)
• Photocationic polymerization initiator 5.0 parts
   (tris(4-chlorophenyl)sulfonium hexafluorophosphate (having a structure represented by the following formula B-1)) 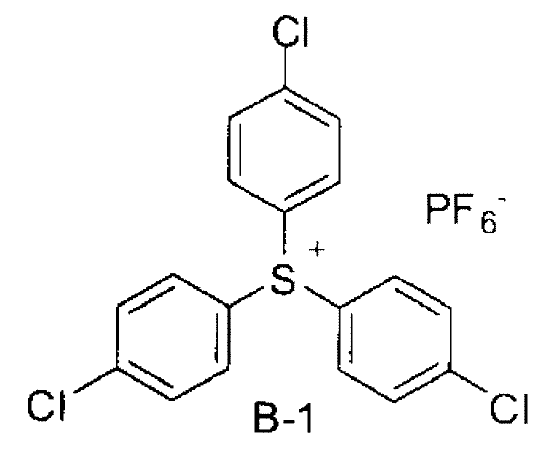
• Sensitizer: 9,10-Butoxyanthracene 3.0 parts
   (manufactured by Kawasaki Kasei Chemicals, Ltd.)

### [Examples 2 to 9 and Comparative Examples 1 to 3]

Ink compositions of Examples 2 to 9 and Comparative Examples 1 to 3 were prepared in the same manner as in the case of the ink composition prepared in Example 1, except that the constitution was changed to the constitutions indicated in Table 1. However, in Example 7, 12% by weight out of 72% by weight of OXT-221 as the oxetane compound used in the preparation of a pigment dispersion was changed to 3-ethyl-3-phenoxymethyloxetane (trade name: OXT-211, manufactured by Toagosei Co., Ltd.).

The structures of the Comparative Compounds (A-1) and (A-2) shown in the Table 1 are presented below.

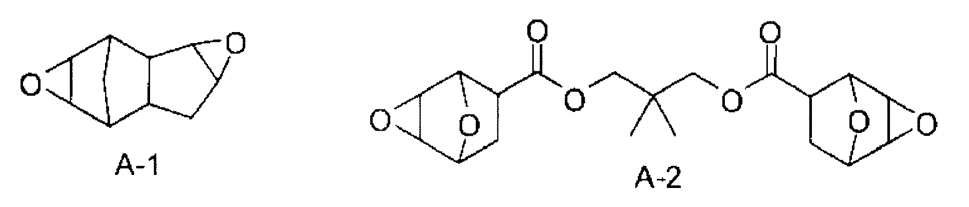

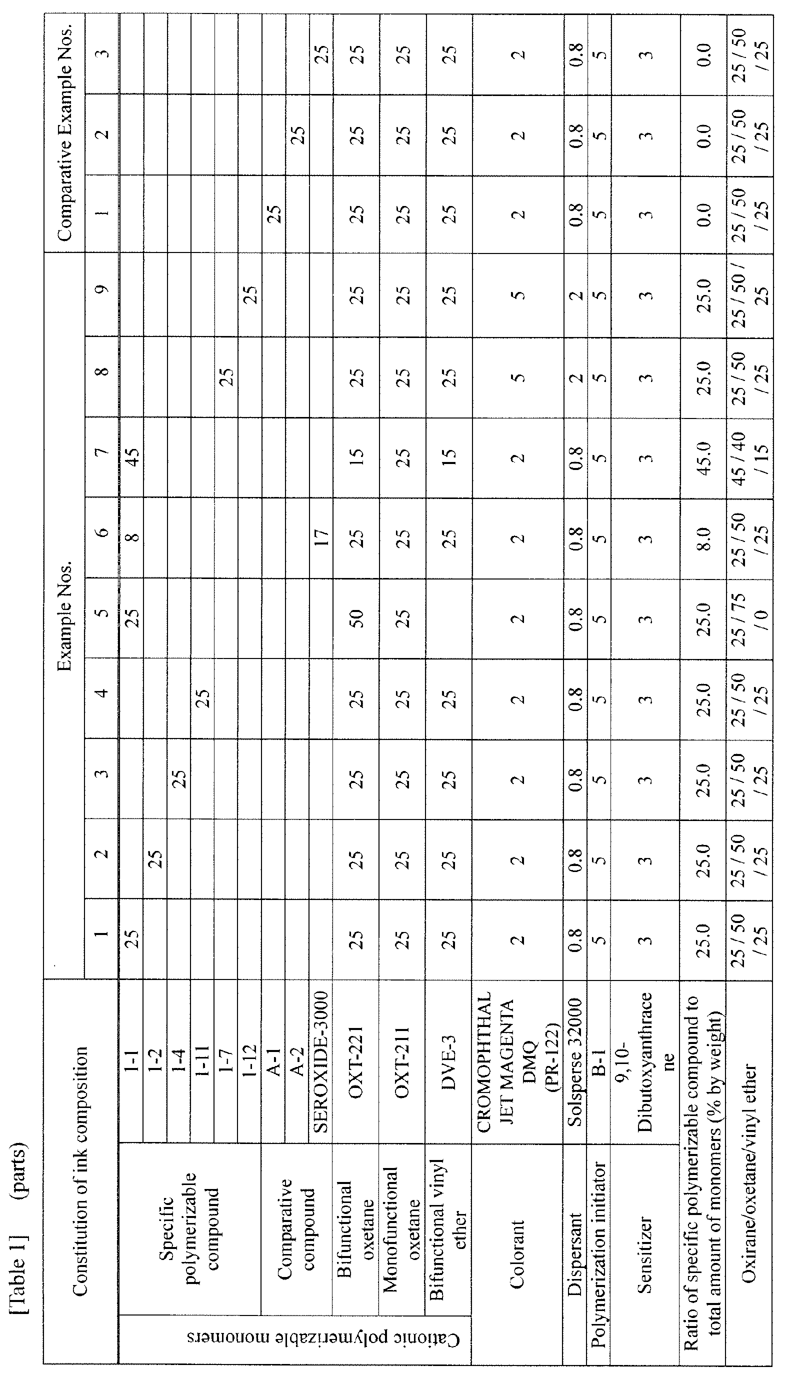

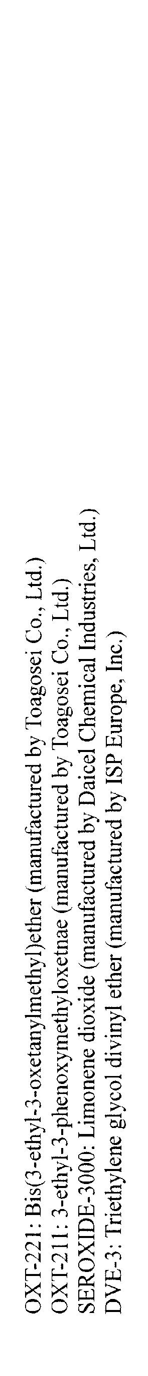

### <Printing and exposure>

Each of the ink compositions of the Examples and Comparative Examples obtained as described above, was used to perform droplet ejection using an inkjet head of a piezoelectric system. The head has 318 nozzles at a nozzle density of 150 per 25.4 mm, and as these nozzles are fixed in two nozzle rows, with one row shifted along the direction of the row at an interval of 1/2 of the nozzle interval, so that 300 droplets per 25.4 mm are ejected in the direction of nozzle arrangement on the medium.

The head and the ink are controlled such that the vicinity of the jetting section is at 50±0.5°C, by circulating warm water within the head. Ink jetting from the head is controlled by a piezoelectric driving signal applied to the head, so as to enable jetting of 6 to 42 pl per one droplet. In the present Examples and Comparative Examples, droplet ejection occurs from the head, while the medium is conveyed at a position 1 mm below the head. The speed of conveyance may be set up in the range of 50 to 200 mm/s. The piezoelectric driving frequency may be set up to 4.6 kH at maximum, and the amount of droplet ejection may be controlled based on these settings.
In the present Examples and Comparative Examples, the amount of ink jetting was controlled to be 24 pl by setting the speed of conveyance at 90 mm/s and the driving frequency at 1.9 kHz, and thereby droplet ejection was carried out at a rate of 10 g/m². Thus, solid printed images were obtained.

The medium is conveyed to the exposure unit after being subjected to droplet ejection, and is exposed using an ultraviolet light emitting diode (UV-LED). In the present Examples and Comparative Examples, "NCCU033 (trade name)" manufactured by Nichia Corp. was used as the UV-LED. This UV-LED emits an ultraviolet light having a wavelength of 365 nm from the tip, and when an electric current of about 500 mA is passed through, a light of about 100 mW is emitted from the tip. A number of the diodes are arranged at an interval of 7 mm, and a power of 0.3 W/cm² is obtained at the medium surface. The time taken from the droplet ejection to the exposure, and the duration of exposure may be changed on the basis of the speed of conveyance of the medium, and the distance between the head and the LED in the direction of conveyance. In the present Examples and Comparative Examples, exposure is achieved about 0.5 seconds after the impact. The exposure energy on the medium may be adjusted to a value between 0.01 and 15 J/cm², in accordance with the settings for the distance to the medium and the speed of conveyance. In the present Examples, the exposure energy was adjusted on the basis of the speed of conveyance. In the measurement of these exposure power and exposure energy, use was made of a value obtained by integration over a wavelength range of 220 to 400 nm using a spectroradiometer URS-40D (trade name) manufactured by Ushio, Inc. In the present Examples and Comparative Examples, a PET film having 50 µm-thick or a polyvinyl chloride sheet was used as the medium, and the printing and exposure test was carried out in an environment at 23°C and 60% R.H. The thickness of the cured image was 19 µm.

### <Evaluation>

The curing sensitivity of each of the ink compositions, brittleness of the resulting cured product, adhesiveness to the recording medium, and jetting stability were evaluated by the following techniques, and the results are presented in Table 2.

### 1. Curing sensitivity

Each of the ink compositions was used to perform printing on a polyvinyl chloride sheet using the apparatus described above. The amount of integral exposure was adjusted by changing the speed of conveyance, and the ink was cured, to thereby obtain a printed matter. The exposure energy used during the curing was measured with an integrating radiometer (trade name: UV POWERMAP, manufactured by EIT, Inc.). Curability was determined based on the presence or absence of surface tackiness of the printed matter, and the minimum amount of integral exposure resulting in the absence of tackiness was evaluated by the following criteria.
A: Less than 100 mJ/cm²
B: 100 mJ/cm² or greater and less than 300 mJ/cm²
C: 300 mJ/cm² or greater and less than 500 mJ/cm²
D: 500 mJ/cm² or greater and less than 700 mJ/cm²
E: 700 mJ/cm² or greater
For practical purposes, the rating of sensitivity needs to be B or higher, and particularly preferably to be A.

### 2. Brittleness

Samples obtained by performing printing on a 175-µm PET film using each of the ink compositions, were punched with a two-hole punch (trade name: Type C, manufactured by Max Co., Ltd.), and the surface condition of the punched circles was observed and rated by the following criteria.
Grade 5: No peeling is recognized at all.
Grade 4: The periphery is chipped off in some parts.
Grade 3: The periphery is partially peeled off.
Grade 2: The periphery is peeled off
Grade 1: The surface is raggedly peeled off.
For practical purposes, the rating of brittleness needs to be 3 or higher, preferably to be 4 or higher, and more preferably to be 5.

### 3. Adhesiveness to recording medium

Printing was performed as described below, on a polystyrene substrate as a recording medium using the aforementioned apparatus. The adhesiveness of the resulting cured product to the polystyrene substrate was evaluated.
The evaluation was performed such that CELLOTAPE (registered trademark) was adhered and firmly pressed on the cured product having a size in the range of 2 cmx 1 cm, and the tape was quickly peeled off perpendicularly to the surface of the cured product. The state of the cured product thereafter was observed by visual inspection.
This adhesiveness test was carried out in a five-grade evaluation, which rates the state with no peel-off of the cured product from the polystyrene substrate, as 5 points. For practical purposes, the rating needs to be 3 points or more, and preferably to be 4 points or more.

### 4. Jetting stability

The ink compositions were stored for 4 weeks at room temperature, and recording was performed on a recording medium using an inkjet recording apparatus having piezoelectric type inkjet nozzles. The presence or absence of dot omission and scattering of ink were observed by the naked eye after continuous printing for 48 hours at normal temperature, and an evaluation was performed on the basis of the following criteria.
A: Dot omission or ink scattering does not occur, or occurs up to 2 times.
B: Dot omission or ink scattering occurs 3 to 10 times.
C: Dot omission or ink scattering occurs 11 times or more.

**[Table 2]**

| Evaluation item | Example Nos. | | | | | | | | | Comparative Example Nos. | | |
|---|---|---|---|---|---|---|---|---|---|---|---|---|
| | 1 | 2 | 3 | 4 | 5 | 6 | 7 | 8 | 9 | 1 | 2 | 3 |
| Amount of integral exposure (mJ/cm²) | A | A | B | B | B | B | A | B | C | A | A | C |
| Brittleness | 5 | 5 | 5 | 5 | 4 | 5 | 3 | 5 | 5 | 4 | 4 | 4 |
| Adhesiveness | 5 | 5 | 5 | 4 | 5 | 4 | 5 | 3 | 5 | 3 | 4 | 4 |
| Jetting stability | A | A | A | A | A | A | A | A | A | B | B | A |

From the results indicated in Table 2, it is understood that the ink compositions of Example 1 to Example 9 containing the specific polymerizable compounds are well-balanced and satisfactory in terms of curing sensitivity, brittleness, adhesiveness and jetting stability, as compared with the case of using a compound having a tricyclo ring skeleton without an oxygen atom (Comparative Example 1), the case of using a compound having two bicyclo ring skeletons each having an oxirane ring (Comparative Example 2), and the case of using a compound that has neither a bicyclo ring skeleton nor a tricyclo ring skeleton (Comparative Example 3). From a comparison of Example 1 with Example 5, it can be seen that a particularly preferable effect is obtained when the specific polymerizable compound and a vinyl ether compound are used in combination. Furthermore, from a comparison of Example 1 with Example 6 and Example 7, it can be seen that a particularly preferable effect is obtained when the content of the specific polymerizable compound in the ink composition is in a suitable range.

According to the invention, there may be provided an active energy ray-curable composition which cures with high sensitivity upon irradiation with active energy rays, and is capable of forming a flexible cured product with no problem in brittleness.
According to the invention, a cured product which cures with high sensitivity upon irradiation with active energy rays, is flexible with no problem in brittleness, and has excellent adhesiveness to recording media, may be formed. Also, an active energy ray-curable ink composition which may be suitably used as an ink composition for inkjet recording that is excellent in jetting stability, may be provided.
Furthermore, according to the invention, there may be provided an inkjet recording method of forming an image on a recording medium using the active energy ray-curable ink composition.

## Claims

1. An active energy ray-curable composition comprising: a compound configured to generate an acid upon irradiation with active energy rays; and a cationic polymerizable monomer, the cationic polymerizable monomer comprising a polyfunctional oxirane compound having, in a molecule, one bicyclo ring skeleton or tricyclo ring skeleton having at least one oxygen atom in the ring, provided that 3-membered rings and 4-membered rings containing oxygen atoms are not included in the ring structure of the bicyclo ring skeleton or tricyclo ring skeleton, and the polyfunctional oxirane compound carrying two or more oxirane rings.

2. The active energy ray-curable composition of claim 1, wherein all of the two or more oxirane rings carried by the polyfunctional oxirane compound share one ring-forming carbon-carbon bond with the bicyclo ring skeleton or tricyclo ring skeleton.

3. The active energy ray-curable composition of claim 1, wherein at least one oxirane ring among the two or more oxirane rings carried by the polyfunctional oxirane compound shares one ring-forming carbon-carbon bond with the bicyclo ring skeleton or tricyclo ring skeleton; and at least one oxirane ring is linked to the bicyclo ring skeleton or tricyclo ring skeleton via a single bond, or is present at a position linked to the bicyclo ring skeleton or tricyclo ring skeleton via a linking group, with 1 to 6 atoms interposed between the position and the skeleton.

4. The active energy ray-curable composition of claim 1, wherein all of the two or more oxirane rings carried by the polyfunctional oxirane compound are respectively linked to the bicyclo ring skeleton or the tricyclo ring skeleton via a single bond, or are each present at a position linked to the bicyclo ring skeleton or tricyclo ring skeleton via a linking group, with 1 to 6 atoms interposed between the position and the skeleton.

5. The active energy ray-curable composition of claim 1, wherein the bicyclo ring skeleton or the tricyclo ring skeleton includes a partial structure represented by the following formula (I):

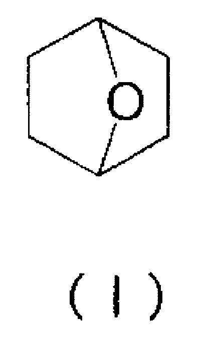

6. The active energy ray-curable composition of claim 1, comprising the polyfunctional oxirane compound and a vinyl ether compound in respective amounts of 10% by weight or more relative to a total weight of the cationic polymerizable monomer.

7. An active energy ray-curable ink composition comprising the active energy ray-curable composition of claim 1.

8. An inkjet recording method comprising ejecting the active energy ray-curable ink composition of claim 7 onto a recording medium using an inkjet recording apparatus, and irradiating the ejected ink composition with active radiation to cure the ink composition.
